Europäisches Patentamt

European Patent Office

Office européen des brevets

(19)

(11) Publication number: **0 317 980**
**A2**

# EUROPEAN PATENT APPLICATION

(21) Application number: 88119489.8

(22) Date of filing: 23.11.88

(51) Int. Cl.⁴: **C04B 35/10 , C04B 35/65**

(30) Priority: 23.11.87 US 123672
08.06.88 US 204050

(43) Date of publication of application:
**31.05.89 Bulletin 89/22**

(84) Designated Contracting States:
**DE ES FR GB**

(71) Applicant: **NORTON COMPANY**
**1 New Bond Street**
**Worcester, MA 01606-2698(US)**

(72) Inventor: **Vayda, John T.**
**8 New Braintree Road, P.O. Box 794**
**West Brookfield, Massachusetts 01585(US)**

(74) Representative: **Baillie, Iain Cameron et al**
**c/o Ladas & Parry Isartorplatz 5**
**D-8000 München 2(DE)**

(54) Refractory ceramic material and preparation thereof.

(57) A refractory material composed of conventional fused or tabular alumina grains, bonded by a novel bonding phase that shows X ray diffraction lines characteristic of both sialon and silicon oxynitride, with the latter predominating, has a modulus of rupture at 1450 C of more than 350 bars and good thermal shock resistance. The material can be made by mixing appropriate amounts of silicon metal powder, fine reactive alumina, and a fine silica source such as bentonite clay with the alumina grains and a binder and dispersant liquid to form a refractory mass suitable for shaping, then shaping, and heating the shaped body in a nitrogen atmosphere.

EP 0 317 980 A2

This invention relates to refractory ceramics comprising substantially discrete aluminous grains and a distinct grain bonding matrix.

U.S. Patent 3,991,166 describes the basic material known as sialon, which for purposes of this application is defined as in claim 1 of said patent, namely a ceramic material consisting of at least 90% of a single phase silicon aluminum oxynitride having an increased cell dimensioned tetrahedral lattice of B-phase silicon nitride wherein the silicon has been partially replaced by aluminum and the nitrogen has been partially replaced by oxygen. U.S. Patents 3,991,148; 4,113,503 and 4,243,621 describes methods of making sialon by adding various densification aids such as magnesia, various polytypes of the silicon-aluminum-oxygen-nitrogen quarternary system, silicon metal, aluminum metal, and/or silicon carbide and heating, sometimes in a nitrogeneous atmosphere.

U.S. Patent 4,670,407 of June 2, 1987 teaches refractories of alumina grains bonded with aluminum nitride and aluminum oxycarbide and discloses refractories comprising alumina grains bonded by graphite, silicon nitride, or sialon. All of the latter group are described as unsatisfactory in certain kinds of service, especially in a reducing atmosphere, and the highest value taught for a high temperature modulus of rupture (hereinafter MOR) is 230 bars at 1500 C (column 4 line 34).

U. S. Patent 4,533,646 teaches refractories comprising large alumina grains bonded with a phase that at least sometimes shows X-ray diffraction lines ascribed to both silicon oxynitride and beta' sialon (column 2 lines 10-12). However, when sialon occurs at all in the products taught by Wang it is a minor constituent compared with silicon oxynitride (column 3 line 55-59). Moreover, the highest MOR at high temperature for a product taught by Wang appears to be 3610 psi, equivalent to 246 bars, at 1482 C for Example 6, as shown in Table VI (column 5 line 39).

## SUMMARY OF THE INVENTION

It has been found that refractories comprising generally discrete grains that are predominantly alumina, bonded with a combination of sialon and silicon oxynitride in which sialon predominates, have exceptionally high hot strength along with good strength at room temperature. The products have a relatively low modulus of elasticity (hereinafter MOE), 30-40 GPa, which in combination with their high MOR leads to good thermal shock resistance. The products can be made by mixing the relatively large alumina grains with enough water and a conventional binder to form a conventional refractory mass, adding finely powdered alumina, silicon metal, and a source of silica, to form a final refractory mass with suitable viscosity for shaping into green bodies of desired size and shape, and heating these green bodies in a nitrogen rich atmosphere.

## DESCRIPTION OF THE PREFERRED EMBODIMENTS

A conventional fused or tabular alumina is preferred for the relatively large grains that make up the predominant volume of the refractories according to this invention. The alumina content of these grains preferably ranges from 87-100 weight percent (hereinafter w/o), with no more than 5 w/o silica, 0.5 - 2 w/o ferric oxide, and 0.1 - 2 w/o titanium dioxide, with any balance generally alkali and alkaline earth metal oxides. Natural or synthetic bauxites are suitable sources of alumina for this part of the refractories according to this invention, as are any of the conventional higher purity aluminas widely available in commerce. A fused alumina with a purity of about 99.5 w/o, iron oxide content of about 0.3 w/o, and soda content of about 0.2 w/o is most preferred; such a material may be obtained from Treibacher North America under the designation Alodur WRG.

The grains of the predominant phase should be capable of passing through an 8 mesh screen (all screen mesh sizes herein refer to U. S. Standard screen sizes). The preferred grading range of the larger grain alumina material is shown in Table 1.

The bonding phase of the refractories according to this invention is not conventional. The bond is a mixture of sialon and silicon oxynitride, with sialon predominating, as indicated by the relative intensities of the X-ray diffraction (hereinafter "XRD") lines associated with the two constituents. Preferably the bond is formed in situ by (a) mixing (i) a fine reactive alumina, with particle size averaging about two microns and substantially no particles larger than 20 microns (ii) silicon metal powder capable of passing through a 200 mesh screen, (iii) a silica source sufficiently fine to pass through a 200 mesh screen, such as bentonite, other clays, or silica fume, and (iv) all the larger alumina grains to be used that will pass through a 100 mesh screen; (b) mixing all constituents larger than 100 mesh in size together dry with a dry conventional

2

green binder such as dextrin; (c) adding conventional and appropriate amounts of water to the mix formed in part (b)

## --Table 1--

### PREFERRED PARTICLE SIZE RANGES FOR LARGE ALUMINOUS GRAINS

| Size Range | Weight Percent Range in Mixture |
|---|---|
| **Part 1: Components of Mixture as Used for Product** | |
| Through 8 on 14 mesh | 28-42 |
| Through 14 on 28 mesh | 10-24 |
| Through 28 on 48 mesh | 8-22 |
| "48F" Fraction | 7-21 |
| "100F" Fraction | 15-29 |
| **Part 2: Composition of "48F" and "100F" Fractions** | |
| **"48F" Fraction** | |
| Retained on 50 mesh | 0 |
| Through 50 on 70 mesh | 0-27 |
| Through 70 on 100 mesh | 27-54 |
| Through 100 on 140 mesh | 8-16 |
| Through 140 on 200 mesh | 8-11 |
| Through 200 mesh | 5-12 |
| **"100F" Fraction** | |
| Retained on 60 mesh | 0 |
| Through 60 on 70 mesh | 0-1 |
| Through 70 on 100 mesh | 0-15 |
| Through 100 on 200 mesh | 35-70 |
| Through 200 on 325 mesh | 11-51 |
| Through 325 mesh | 0-30 |

(End of Table 1)

to form a refractory mass; (d) adding the mixture prepared in step (a) to the refractory mass formed in step (c) to form a refractory mass containing all the constituents needed and suitable for shaping; (e) shaping and compressing the refractory mass formed in step (b) into the shape and approximate size desired for the final refractory article; and (f) firing the shaped article from step (e) in a nitrogen atmosphere at a suffi ciently high temperature, but not so high as to allow silicon to melt and drain from the shaped article, for a sufficient time to convert the bonding powders into a strong bonding phase that exhibits XRD patterns of both sialon and silicon oxynitride ($Si_2ON_2$), with the most intense line characteristic of sialon being more intense in the total XRD pattern than the most intense line characteristic of silicon oxynitride.

Preferably, the amount of larger alumina grains used in the mixture formed in step (d) above should fall within the range of 56-74 w/o (exclusive of water and binder), the amount of fine reactive alumina should fall in the range of 15-25 w/o, the amount of silicon metal in the range of 5-23 w/o, and the amount of the source of fine silica in the range of 0.5-2 w/o; also the particle size range of this mixture preferably falls within the limits shown in Table 2. After nitriding, this composition range will result in a final product with an overall atomic percent of aluminum between 28 and 37 and an overall atomic percent of silicon between 2.3 and 11.

The preferred source of fine silica is raw bentonite clay. Magnesium containing types of bentonite, such as Wyoming Bentonite, are preferred over calcium containing types of bentonite, such as Panther Creek. The most preferred bentonite has an approximate chemical analysis of 60 w/o $SiO_2$, 20 w/o $Al_2O_3$, 3 w/o $Na_2O$, 4 w/o $Fe_2O_3$, and 3 w/o MgO.

## --Table 2--

### PREFERRED SIZE DISTRIBUTION RANGE FOR POWDER MIXTURES

| | |
|---|---|
| Greater than 16 mesh | 26 ± 5 w/o |
| Through 16 on 30 mesh | 11 ± 5 w/o |
| Through 30 on 50 mesh | 10 ± 5 w/o |
| Through 50 on 100 mesh | 8 ± 5 w/o |
| Through 100 mesh | 45 ± 5 w/o |
| Though 325 mesh | 35 ± 5 w/o |

### --(End of Table 2)--

The practice of the invention can be further appreciated from the following specific examples.

### Examples 1-8

These examples describe the preparation of 22.5 x 5.6 x 2.5 cm bars used to measure the physical properties of the refractories according to this invention. The most preferred raw materials as described above were used to make all these examples. Refractory masses made from the powders were pressed into bar shape by a hydraulic uniaxial press operating within a mold block at a total pressure of about 50 MPa, and the pressed bars were fired on a cycle shown in Table 3. The compositions of the powders are shown in Table 4, and some physical properties of the final refractories are shown in Table 5.

All these examples except #1 show higher hot strengths than those of any alumina refractory previously known to the applicant. Composition #6 is generally most preferred, because it combines the highest hot strength with high density. The strength of composition #8 is almost as good, but the density is significantly less, increasing the possibility of undesirable penetration into the refractory body by fluid materials contained therein.

The screen analysis for the powders used to make Example 6, the best mode known to the applicant of practicing the invention, was 25 w/o retained on 16 mesh, 12 w/o through 16 on 30 mesh, 11 w/o through 30 on 50 mesh, 9 w/o through 50 on 100 mesh, 43 w/o through 100 mesh, and 38 w/o through 325 mesh.

XRD patterns of products from examples 1-8 showed line spacings characteristic of both sialon, specifically sialon of the approximate composition $Si_5AlON_7$, and $Si_2ON_2$. The XRD analysis was performed with Cu K-alpha radiation on powdered samples at a scanning rate of 0.25 degrees per minute. The line characteristic of a d-

4

## --Table 3--

### FIRING AND COOLING CYCLE

| Cumulative Time Since Firing Began, Days | Temperature in Degrees C at End of Time Shown | Nitrogen Gas Flow |
|:---:|:---:|:---:|
| 0.2 | 150 | No |
| 0.7 | 730 | No |
| 1.1 | 780 | No |
| 1.5 | 1100 | Yes |
| 1.9 | 1135 | Yes |
| 2.1 | 1285 | Yes |
| 2.5 | 1405 | Yes |
| 2.9 | 1410 | Yes |
| 3.2 | 1350 | Yes |
| 3.5 | 970 | Yes |
| 3.9 | 725 | Yes |
| 4.0 | 585 | Yes |
| 4.3 | 540 | Yes |
| 4.7 | 475 | Yes |
| 5.0 | 395 | Yes |
| 5.5 | 210 | Yes |
| 6.5 | 30 | Yes |

Note: Temperature rise or fall was approximately linear between the points shown.

--(End of Table 3)--

spacing of 0.444 nm was used to measure the relative amount of $Si_2ON_2$, and the line characteristic of a d-spacing of 0.2686 nm was used for $Si_5AlON_7$. The XRD lines characteristic of 0.444 nm and 0.336 nm have been shown to be almost equally intense, and stronger than any other XRD lines for silicon oxynitride, by Idrestedt and Brosset, 18 Acta Chimica Scandinavica 1879-86 (1964). The 0.2686 nm line is approximately equal in intensity to the 0.2504 line, and these two are more intense than any others except the 0.135 nm line, in the XRD spectrum of $Si_5AlON_7$. The relative intensities of

## --Table 4--
### COMPOSITION OF EXAMPLES 1-8

| Example No. | Per Cent By Weight of: | | | |
|---|---|---|---|---|
| | Fused Alumina | Reactive Alumina | Silicon Metal Powder | Bentonite Clay |
| 1 | 74 | 20 | 5 | 1 |
| 2 | 69 | 20 | 10 | 1 |
| 3 | 64 | 20 | 15 | 1 |
| 4 | 74 | 15 | 10 | 1 |
| 5 | 64 | 25 | 10 | 1 |
| 6 | 62 | 20 | 17 | 1 |
| 7 | 59 | 20 | 20 | 1 |
| 8 | 56 | 20 | 23 | 1 |

--(End of Table 4)--

## Table 5
### PHYSICAL PROPERTIES OF EXAMPLES 1-8

| Example No. | Average Value for: (Number of measurements in parentheses after each value.) | | | | | |
|---|---|---|---|---|---|---|
| | Density, $Mg/m^3$ | | W/o Gain on Firing | MOE, GPa | MOR, Bars | |
| | Green | Fired | | | 30 C | 1450 C |
| 1 | - | 3.14(15) | 2.8(15) | 81(15) | 242(6) | 202(9) |
| 2 | - | 3.14(15) | 5.9(15) | 44(15) | 216(6) | 263(9) |
| 3 | - | 3.04(15) | 9.2(15) | 30(15) | 151(6) | 264(9) |
| 4 | - | 3.13(15) | 6.1(15) | 45(15) | 210(6) | 257(9) |
| 5 | - | 3.13(12) | 5.9(12) | 43(12) | 202(6) | 295(6) |
| 6 | 2.87(21) | 3.10(21) | 10.4(21) | 46(21) | 213(9) | 355(9) |
| 7 | 2.77(21) | 3.03(21) | 12.2(21) | 43(21) | 200(9) | 300(9) |
| 8 | 2.65(21) | 2.96(21) | 14.1(21) | 42(21) | 198(9) | 348(9) |

--(End of Table 5)--

the lines in the products made in Examples 1-8 is shown in Table 6.

Normally, the XRD spectrum of the total refractory product is what is actually measured. This total spec

## --Table 6--
### Intensities of XRD Lines in Products of Examples 1-8

| Example No. | Relative Intensity of XRD Line for Spacing of 0.2686 Nm to XRD Line for Spacing of 0.444 Nm |
|---|---|
| 1 | 8.8 |
| 2 | 4.2 |
| 3 | 3.3 |
| 4 | 4.6 |
| 5 | 3.2 |
| 6 | 2.9 |
| 7 | 2.6 |
| 8 | 3.0 |

--(End of Table 6 and of Examples 1-8)--

trum naturally shows very high intensities for line spacings characteristic of alumina, because that is the material present in largest amount in the total refractory. Alumina is present in the discrete grains and possibly in the bonding phase as well, but the silicon oxynitride and sialon are normally present only in the bonding phase. The relative amounts of the most intense lines characteristic of the two different types of silicon containing material in the refractory are used to characterize this invention, but the most intense line or lines need not be measured directly. If direct measurement is inconvenient for any reason, such as overlap with another constituent of the refractory or with another line of the material to be measured, a less intense line may be measured directly, and the intensity of the more intense line calculated, using known relative intensites for the pure materials. A listing of useful XRD lines, with their relative intensities, is given in Table 7. A listing of several line intensities

## Table 7

### RELATIVE INTENSITIES OF XRD LINES FOR SELECTED SIALONS

| z = 1 | | z = 2 | | z = 3 | | z = 4 | |
|---|---|---|---|---|---|---|---|
| Line Spacing, Nm | Relative Intensity | Line Spacing, Nm | Relative Intensity | Line Spacing, Nm | Relative Intensity | Line Spacing, Nm | Relative Intensity |
| .6624 | 18 | .6647 | 18 | .6668 | 18 | .6692 | 18 |
| .3824 | 20 | .3838 | 20 | .3850 | 20 | .3864 | 20 |
| .3312 | 85 | .3323 | 85 | .3334 | 85 | .3346 | 85 |
| .2686 | 100 | .2706 | 100 | .2725 | 100 | .2740 | 100 |
| .2504 | 100 | .2512 | 100 | .2520 | 100 | .2529 | 100 |
| .2330 | 10 | .2345 | 10 | .2359 | 10 | .2371 | 10 |
| .2200 | 35 | .2212 | 35 | .2224 | 35 | .2235 | 35 |
| .1912 | 6 | .1919 | 6 | .1926 | 6 | .1935 | 6 |
| .1906 | 6 | .1916 | 6 | .1925 | 6 | .1932 | 6 |
| .1837 | 20 | .1843 | 20 | .1849 | 20 | .1856 | 20 |
| .1765 | 70 | .1774 | 70 | .1783 | 70 | .1791 | 70 |
| .1603 | 20 | .1611 | 20 | .1618 | 20 | .1625 | 20 |
| .1558 | 10 | .1565 | 10 | .1572 | 10 | .1579 | 10 |
| .1520 | 35 | .1525 | 35 | .1530 | 35 | .1535 | 35 |
| .1469 | 35 | .1481 | 35 | .1493 | 35 | .1502 | 35 |
| .1445 | 20 | .1450 | 20 | .1455 | 20 | .1460 | 20 |
| .1371 | 4 | .1382 | 4 | .1392 | 4 | .1400 | 4 |
| .1350 | 140 | .1356 | 140 | .1363 | 18 | .1370 | 18 |
| .1343 | 18 | .1353 | 18 | .1361 | 140 | .1367 | 140 |
| .1325 | 18 | .1329 | 18 | .1334 | 18 | .1338 | 18 |
| .1297 | 85 | .1303 | 85 | .1308 | 85 | .1313 | 85 |
| .1275 | 20 | .1279 | 20 | .1284 | 85 | .1288 | 20 |
| .1267 | 85 | .1276 | 85 | .1283 | 20 | .1291 | 85 |
| .1252 | 4 | .1256 | 4 | .1260 | 4 | .1265 | 4 |

-----

Note: The "z" in the headings of this table refers to the generic beta' sialon formula $Si_{(6-z)}O_zAl_zN_{(8-z)}$.

-(End of Table 7)-

for silicon oxynitride is given in the Idrestedt and Brosset reference already cited.

The invention may be practiced with bonding phases containing any type of sialon, although refractories with $Si_5AlON_7$ are preferred.

Both sialon and silicon oxynitride phases are oxidation resistant, as is the alumina of which the large grains in the refractories according to this invention are composed. Thus the products have very good oxidation resistance overall. The bond phase appears to fill in all the surface well, leaving little or no opportunity for infiltration by materials contained in bodies made of these refractories.

While not wishing to be bound by theory, the applicant believes that the toughness of the refractories according to this invention may be due to microcracking induced by disparities between the bonding phase and the alumina grains. The sialon component of the bonding phase has a thermal conductivity about three times higher than alumina, while its thermal expansion coefficient is about three time lower. Therefore, development of numerous internal microcracks on heating would be expected, and these could contribute to the toughness of the body without seriously weakening its strength, in the same manner as has been postulated for zirconia toughened alumina.

Refractories according to this invention have good thermal shock resistance, as indicated by the following empirical test: Six test specimens of the material, each in the form a cylinder with a diameter of 15.2 cm and a height of 1.27, are prepared. These specimens are placed in holder that keeps them spaced about 2.5 cm apart and then inserted in a furnace that is maintained at 1200 C. After the specimens have reached 1200 C, they are removed from the furnace and allowed to cool naturally in the ambient air. After the specimens have cooled, they are examined for cracks. Each uncracked specimen is given a score of 3 and each cracked specimen a score of 1. The entire cycle is then repeated nine times, and the scores in all ten cycles added.

Product from Example 6 above had a score of 107 on this test, while a reactive alumina bonded refractory with very similar discrete grains, type AH199 from Norton Company, Worcester, Massachusetts, had a score of 20, and another type of conventionally bonded refractory, Norton Type AH191A, which has mixed mullite and alumina discrete grains and a reactive alumina bond and is considered to have good thermal shock resistance, had a score of 80. Refrtories according to this invention are clearly better than these conventional materials.

Refractories according to this invention also have good wear resistance, as measured by a sand blast penetration test. This test involves exposing a sample of material to graded silicon carbide grits propelled against the sample at a pressure of about 166 kilopascals for a fixed time. The depth of penetration of the sample is then measured. A refractory according to Example 6 above had a penetration depth of 2.30 mm in this test, while type AH191A refractory already described above had a penetration depth of 5.65 mm. The refractory according to this invention clearly has better wear resistance.

Refractories according to this invention have broad uses, especially as kiln furniture, high temperature structural materials, and containers for molten aluminum. Products of any shape or size can be made in the same general way as shown for the examples above, merely by modifying the step of shaping the green body according to techniques well known to those skilled in the art.

**Claims**

1. A refractory ceramic material, comprising:
   (a) substantially discrete grains predominantly composed of alumina; and
   (b) a bonding phase having an XRD pattern combining lines characteristic of silicon oxynitride with lines characteristic of sialon, the most intense line characteristic of sialon being more intense than the most intense line characteristic of silicon oxynitride.

2. A material according to claim 1, wherein said discrete grains have a size distribution within the ranges shown in Table 1 herein and include no more than one number percent of grains that are too large to pass through an 8 mesh screen.

3. A material according to claim 2, wherein said discrete grains contain at least 87 w/o alumina, no more than 5 w/o silica, 0.5 - 2 w/o ferric oxide, and 0.1 - 2 w/o titanium dioxide.

4. A material according to claim 3, wherein the atomic percent of aluminum in the material is from 28-37 and the atomic percent of silicon is from 2.3-11.

5. A material according to claim 4, wherein said discrete grains contain at least 99.5 w/o alumina.

6. A material according to any one of the preceding claims, wherein said bonding phase has XRD lines characteristic of sialon having the approximate formula $Si_5AlON_7$.

7. A material according to any one of the preceding claims, which has a modulus of rupture of at least 260. bars at 1450 C.

8. A process for the manufacture of a refractory ceramic material comprising (i) substantially discrete and relatively large grains predominantly composed of alumina and (ii) a bonding phase having an XRD diffraction pattern combining lines characteristic of silicon oxynitride with lines characteristic of sialon, the most intense line characteristic of sialon being more intense in the product than the most intense line characteristic of silicon oxynitride, said process comprising the steps of:

(a) mixing (i) grains consisting predominantly of alumina and sufficient in size to be retained on a 100 mesh screen (ii) a fine reactive alumina, with particle size averaging about two microns and substantially no particles larger than 20 microns, (iii) silicon metal powder capable of passing through a 200 mesh screen, (iv) a fine silica source, (v) a green binder, and (vi) sufficient liquid to form a slurry with suitable viscosity for shaping into a green ceramic body;

(b) shaping a green body from the refractory mass formed in step (a); and

(c) heating in a nitrogen-rich atmosphere, at a temperature not so high as to allow drainage of molten silicon from the body, for a sufficient time to generate a bonding phase that exhibits XRD patterns of both sialon and silicon oxynitride.

9. A process according to claim 7, wherein said mixture formed in step (a) has a particle size distribution within the ranges shown in Table 2 herein.

10. A process according to claim 9, wherein said mixture formed in step (a) has a composition comprising large alumina grains within the range of 56-74 w/o, fine reactive alumina within the range of 15-25 w/o, silicon metal within the range of 5-23 w/o, and a fine silica source within the range of 0.5-2 w/o.

11. A process according to any one of claims 8-10, wherein said heating of step (c) includes at least 0.5 day of heating at temperatures greater than 650 C before exposure to a greater nitrogen pressure than that of the ambient atmosphere, at least one day of subsequent heating in an atmosphere of substantially pure nitrogen at temperatures between 110 and 1405 C, and at least two days of subsequent gradual cooling in an atmosphere of substantially pure nitrogen before the body is exposed to temperatures below 200 C.